# EUROPEAN PATENT APPLICATION

(11) **EP 3 243 651 A1**
(43) Date of publication of application: **15.11.2017**
(21) Application number: 15871779.3
(22) Date of filing: 29.10.2015
(51) Int. Cl.: B32B 15/08, B32B 15/20, B29C 45/14, C25D 11/04

(54) **METAL-RESIN COMPOSITE AND PREPARATION METHOD THEREOF AND ELECTRONIC PRODUCT HOUSING**

(30) Priority: 25.12.2014 CN 201410821840
(71) Applicant: BYD Company Limited, Shenzhen, Guangdong 518118 (CN)
(72) Inventor: ZHANG, Xiao, Shenzhen Guangdong 518118 (CN); TAO, Letian, Shenzhen Guangdong 518118 (CN); SUN, Jian, Shenzhen Guangdong 518118 (CN); CHEN, Liang, Shenzhen Guangdong 518118 (CN)
(74) Representative: Gulde & Partner
(86) International application number: PCT/CN2015/093247
(87) International publication number: WO 2016/101706

(57) **Abstract**

The present disclosure provides a metal-resin composite and a method of preparing the same. The metal includes titanium or titanium alloy, the composite includes a metal substrate and a resin layer coated on at least part of surface of the metal substrate, a recess is distributed on the part of surface of the metal substrate coated with the resin layer, a part of resin of the resin layer extends downward to fill in the recess, a content of oxygen element on surface of the metal substrate is greater than 1wt%. The method includes dipping a metal substrate in an etching solution containing at least one alkali metal hydroxide so as to form a recess on surface of the metal substrate, and injecting a resin onto surface of the metal substrate after surface treatment sp as to form a resin layer. The metal-resin composite of the present disclosure is suitable for a shell of electronic product.

## Description

### CROSS-REFERENCE TO RELATED APPLICATIONS

This application is based on and claims priority to and benefits of Chinese Patent Application No. 201410821840.4, filed with the State Intellectual Property Office (SIPO) of the People's Republic of China on December 25, 2014. The entire contents of the above-identified application are incorporated herein by reference.

### FIELD

Examples of the present disclosure generally relate to a metal-resin composite and method of preparing the same, and also relates to a shell of electronic product.

### BACKGROUND

In component manufacturing filed of automobile, household appliances, industrial machinery, etc., a method of integrally molding metal and resin is needed.

Currently, commonly used method of combining titanium material and resin is adhesive method. This method combines titanium material and resin via an adhesive to obtain a composite. However, a combination force between the titanium material and the resin of the composite obtained from this method may be relatively low, and the adhesive layer is not resistant to acid and alkali, which may affect application of the composite. In addition, since the adhesive layer may have a certain thickness, a size of a final product may be affected.

Aiming at the above shortage of the adhesive method, researchers have developed various kind of method for combining titanium material and resin.

A CN patent application(Publication No. CN102794863A) disclosed a composite of titanium or titanium alloy and plastic and a method of preparing the same. The method is performed by subjecting a titanium or titanium alloy substrate to an anodic oxidation treatment to form a nano-porous oxidation film on surface of the titanium or titanium alloy substrate, and then placing the titanium or titanium alloy substrate after anodic oxidation treatment in an injection molding mould to combine a plastic member with the nano-porous oxidation film so as to obtain a composite.

Another CN patent application(Publication No. CN102794864A) disclosed a composite of titanium or titanium alloy and plastic and a method of preparing the same. The method is performed by subjecting a titanium or titanium alloy substrate to an electrochemical cathode processing to form a hydrogenated titanium layer on surface of the titanium or titanium alloy substrate, subjecting the titanium or titanium alloy substrate with the hydrogenated titanium layer to an anodic oxidation treatment to form a nano-porous oxidation film on surface of the titanium or titanium alloy substrate, and then placing the titanium or titanium alloy substrate after anodic oxidation treatment in an injection molding mould to combine a plastic member with the nano-porous oxidation film so as to obtain a composite.

However, a pore of the oxidation film formed by anodic oxidation treatment is a nanopore, the pore is relatively small and the oxidation film is relatively thin, which may cause that a depth of the nanopore is not sufficient, and resulting in a bad combination force between the metal substrate and the resin layer and a bad practicability of the finally obtained composite.

Another CN patent (Patent No. CN101578170B) disclosed a composite of metal and resin, and a method of preparing the same. The method adopts chemical etching process to perform surface treatment to a titanium alloy substrate, and then a resin composition is injected on surface of the substrate after surface treatment so as to obtain the composite. A chemical etching agent of the method may be hydracids, sulfuric acid, high-temperature phosphoric acid aqueous solution, hydrofluoric acid and ammonium bifluoride, preferably ammonium bifluoride.

Inventors of the present disclosure found during practice process that: when adopting acid as an etching agent to chemical etch surface of titanium material and then injection molding a resin to form a composite, a combination force between the titanium material and the resin may still need to be further improve.

### SUMMARY

The present disclosure seeks to solve the problem that a combination force between the metal substrate and the resin layer of a composite of titanium or titanium alloy and resin in prior art may be low, and thus provides a metal-resin composite and method of preparing the same, a combination force between a metal substrate and a resin layer of the metal-resin composite may be relatively high.

According to a first aspect of the present disclosure, a metal-resin composite is provided, the metal includes titanium or titanium alloy, the composite includes a metal substrate and a resin layer coated on at least part of surface of the metal substrate, a recess is distributed on the part of surface of the metal substrate coated with the resin layer, a part of resin of the resin layer extends downward to fill in the recess, a content of oxygen element on surface of the metal substrate is greater than 1wt%.

According to a second aspect of the present disclosure, a method of preparing a metal-resin composite is provided, the metal includes titanium or titanium alloy, the method includes an etching step and an injection molding step:
in the etching step, a metal substrate is dipped in an etching solution so as to form a recess on surface of the metal substrate to obtain a metal substrate after surface treatment, the etching solution includes at least one alkali metal hydroxide, a content of oxygen element on surface of the metal substrate after surface treatment is greater than 1wt%;
in the injection molding step, a composition containing a resin is injected onto surface of the metal substrate after surface treatment so as to fill part of the composition into the recess and to form a resin layer after molding.

According to a third aspect of the present disclosure, a metal-resin composite prepared by the method stated above is provided.

According to a fourth aspect of the present disclosure, a shell of electronic product is provided, the shell includes a metal shell body and a resin member coated on at least part of an inner surface and/or at least part of an outer surface of the metal shell body, the metal shell body is made of titanium or titanium alloy, wherein a recess is distributed on surface of the metal shell body coated with the resin member, part of resin in the resin member extends downward and fills in the recess, a content of oxygen element on surface of the metal shell body coated with the resin member is greater than 1wt%.

With the metal-resin composite of the present disclosure, the combination force between the metal substrate and the resin layer may be high, the resin layer won't fall off from surface of the metal substrate easily, the metal-resin composite has a good structure stability, and thus could satisfy requirements of various application and suitable for various electronic product shells.

With the method of preparing metal-resin composite of the present disclosure, an etching agent includes an alkali metal hydroxide. Comparing with surface treatment using an acid etching liquid, with the method of the present disclosure, on one hand, a densely distributed recess may be formed on surface of the metal substrate, on the other hand, destruction corrosion won't occur on surface of the metal substrate, thus the obtain metal substrate after surface treatment may still have a relatively high strength. In addition, by etching the metal substrate and injection molding resin onto surface of the metal substrate after surface treatment to form the metal-resin composite via the method of the present disclosure, a combination strength between the metal substrate and the resin layer may be relatively high, the reason of which may be: a densely distributed recess having relatively homogeneous size is formed on surface of the metal substrate after surface treatment when etching the metal substrate via the method of the present disclosure, which may anchor the resin layer in the metal substrate, moreover, a high content of oxygen element exists on surface of the metal substrate after surface treatment, not all of those oxygen elements exists in the form of metallic oxide, a portion of those oxygen elements exists in the form of hydroxyl, which may interact with resin when combined with resin, such that the finally obtained metal-resin composite may have a higher combination strength between the metal substrate and the resin layer.

In addition, the etching solution used in the method of the present disclosure has a low poisonousness and low volatility, thus operation of the method is safe and less pollution to the environment.

Besides, the constituent of the etching solution used in the method of the present disclosure may have a abroad sources and a low price, which may reduce operation cost of the method. Thus, the method of the present disclosure may be suitable for mass production.

### BRIEF DESCRIPTION OF THE DRAWINGS

Fig. 1 is a section view of cell phone shell according to one example of the present disclosure, including a front view and a top view; and
Fig. 2 is a section view of a shell of an intelligent watch according to one example of the present disclosure.

### <Reference number>

| | |
|---|---|
| 1: cell phone metal shell body 1 | 2: resin layer |
| 3: opening | 4: intelligent watch shell body |
| 5: resin inside liner | 6: signal element opening |

### DETAILED DESCRIPTION

Reference will be made in detail to examples of the present disclosure. The examples described herein are explanatory and illustrative, which are used to generally understand the present disclosure. The examples shall not be construed to limit the present disclosure.

According to a first aspect of the present disclosure, a metal-resin composite is provided. The composite includes a metal substrate and a resin layer coated on at least part of surface of the metal substrate, a recess is distributed on the part of surface of the metal substrate coated with the resin layer, a part of resin of the resin layer extends downward to fill in the recess.

According to the metal-resin composite of the present disclosure, the metal may include pure titanium, and the metal may also include titanium alloy. The titanium alloy refers to an alloy which includes a basic element of titanium element and is formed by adding other element, the titanium alloy could be any common titanium alloy. The metal substrate may be various molding products made of titanium or titanium alloy, and the metal substrate may have various shapes depending on using situation of the final prepared metal-resin composite, there is no particular limitation for the shape of the metal substrate.

The recess is distributed on surface of the metal substrate coated with the resin layer, the recess is densely distributed on the surface of the metal substrate. The recess may be formed by chemical etching the surface of the metal substrate. Part of resin of the resin layer extends downward and fills in the recess so as to anchor the resin layer in the metal substrate. In embodiments of the present disclosure, each recess may have a width of about 10nanometers to about 100000nanometers and a depth of about 10nanometers to about 5000nanometers. When the size of the recess is within the range above, on one hand, it won't bring negative influence to the strength of the metal substrate, on the other hand, the resin layer may be firmly anchor in the metal substrate, such that a relatively high combination force between the resin layer and the metal substrate may be obtained, and then the metal-resin composite may have relatively high structure stability. From perspective of further improve the combination force between the resin layer and the metal substrate, the width of the recess is preferably about 300nanometers to about 30000nanometers, and the depth of the recess is preferably about 100nanometers to about 3000nanometers. In embodiments of the present disclosure, "width of the recess" refers to a maximum distance between two points on a contour line determined by a port of the recess on surface of the metal substrate, and "depth of the recess" refers to a vertical distance between the port of the recess on surface of the metal substrate and the bottom of the recess. The width and depth of the recess could be measured via electron microscopic observation method.

According to the metal-resin composite, the content of oxygen element on surface of the metal substrate is greater than 1wt%. Comparing with the content of oxygen element on surface of the metal substrate lower than 1wt%, when the content of oxygen element on surface of the metal substrate is greater than 1wt%, combination strength between the resin layer and the metal substrate of the composite may be obviously improved. Preferably, the content of oxygen element on surface of the metal substrate is about 1wt% to about 10wt%, more preferably about 2wt% to about 8wt%, and further more preferably about 5wt% to about 7wt%. An element composition on surface of the metal substrate could be measured through energy spectrum analytical method, and a percentage of the quantity of oxygen element to the total quantity of the element composition on surface of the metal substrate is defined as the content of the oxygen element on surface of the metal substrate.

The main resin in the resin layer could be selected depending on specific using requirement, as long as the resin could be combined with the titanium or titanium alloy. Generally, the main resin in the resin layer could be selected from thermoplastic resin, such as polyphenylene sulfide, polyester, polyamide, polycarbonate, polyolefin and combinations thereof. The polyester may be common polymer that formed through condensation of dicarboxylic acid and diol, the specific examples may include, but no limited to, polybutylene terephthalate and/or polyethylene glycol terephthalate. The polyamide could be common polymer that formed through condensation of diamine and dicarboxylic acid, the specific examples may include, but no limited to, polyhexamethylene adipamide(PA66), polynonylhexylenediamine(PA69), polybutyl diacylenediamin, polyhexamethylene dodecanamide(PA612), poly(hexamethylene sebacamide)(PA610), poly(decamethylene sebacamide)(PA1010), polyundecaneamid(PA11), polylauramide(PA12), polycaprylamide(PA8), poly(9-amino nonanoic acid)(PA9), polycaprolactam(PA6), poly(p-phenylene terephthalamide), polyphenyldimethylenediamine, polyhexamethylene terephthalamide (PA6T) and polynonamethylene terephthalamide(PA9T). The specific examples of the polyolefin may include, but no limited to, polystyrene, polypropylene, polymethyl methacrylate, and poly (acrylonitrile-butadiene styrene).

Besides the main resin, the resin layer may further include at least one kind of filler. The filler may be selected depending on specific using requirement. The filler may include a fiber filler and/or powder filler. The fiber filler may be at least one selected from a group consisting of glass fiber, carbon fiber and aromatic polyamide fiber. The powder filler may be at least one selected from a group consisting of calcium carbonate, magnesium carbonate, silicon dioxide, heavy barium sulfate, talcum powder, glass and clay. The content of the filler may be common selection. Generally, based on 100 weight parts of the main resin, the filler has a content of about 10 weight parts to about 150 weight parts, preferably about 15 weight parts to about 100 weight parts, more preferably about 20 weight parts to about 50 weight parts.

A thickness of the metal substrate and the resin layer may be selected according to a specific using situation of the metal-resin composite, as long as the metal-resin composite could satisfy using requirements. Generally, in some embodiments, the resin layer has a thickness of about 0.5millimeters to about 10millimeters.

According to a second aspect of the present disclosure, a method of preparing a metal-resin composite is provided, the metal includes titanium or titanium alloy, the method includes an etching step and an injection molding step.

In the etching step, a metal substrate is dipped in an etching solution so as to form a recess on surface of the metal substrate to obtain a metal substrate after surface treatment, the etching solution includes at least one alkali metal hydroxide.

According to the method of the present disclosure, after the etching step, the recess is formed on surface of the obtained metal substrate after surface treatment, the recess is densely distributed on the surface of the metal substrate. Each recess has a width of about 10nanometers to about 100000nanometers, preferably about 300nanometers to about 30000nanometers, and a depth of about 10nanometers to about 5000nanometers, preferably about 100nanometers to about 3000nanometers.

According to the method of the present disclosure, a content of oxygen element on surface of the metal substrate after surface treatment is greater than 1wt%, preferably about 2wt% to about 8wt%, more preferably about 5wt% to about 7wt%.

According to the method of the present disclosure, the etching solution includes as least one kind of alkali metal hydroxide.

In some embodiments, the alkali metal hydroxide includes sodium hydroxide and/or potassium hydroxide.

A content of the alkali metal hydroxide in the etching solution could be selected according to an expect etching speed. Preferably in the etching solution, the alkali metal hydroxide has a concentration of about 1mol/L to about 10mol/L. When the concentration of the alkali metal hydroxide is within the above range, not only a densely distributed recess could form on surface of the metal substrate, but also destruction to the metal substrate may be smaller. More preferably, in the etching solution, the alkali metal hydroxide has a concentration of about 5mol/L to about 8mol/L.

Preferably, the etching solution may include at least one kind of buffering agent. Though a densely distributed recess may be formed on surface of the metal substrate when the etching solution do not include a buffering, when the etching solution includes a buffering agent, a concentration of hydroxide ion in the etching solution may be stabilized within a certain ranger during a relatively long period, such that a stable etching effect may be obtained, which may not only satisfy requirement of mass production, but also further improve a combination force between the metal substrate and the resin layer of the final obtained metal-resin composite.

In embodiments of the present disclosure, the buffering agent could be any common materials that could stabilize the concentration of hydroxide ion in the etching solution. Preferably, the buffering agent is at least one selected from a group consisting of boric acid, sodium borate, sodium carbonate, sodium hydrogen carbonate, trisodium phosphate, disodium hydrogen phosphate, and sodium citrate.

A content of the buffering agent may be selected as long as the concentration of hydroxide ion in the etching solution could be stabilized within an expect range. Preferably, the buffering agent has a concentration of about 0.1mol/L to about 1.5mol/L, more preferably, the buffering agent has a concentration of about 0.2mol/L to about 1mol/L.

A solvent of the etching may be common selections, generally the solvent could be water.

The etching solution has a temperature of about 15Celsius degrees to about 70Celsius degrees. From the perspective of further improve the combination strength between the metal substrate and the resin layer of the metal-resin composite, the etching solution has a temperature of about 15Celsius degrees to about 35Celsius degrees. From the perspective of further improve etching speed, reduce a time of dipping the metal substrate in the etching solution so as to reduce the influence caused by the etching to appearance and size of the metal substrate, the etching solution has a temperature of about 40Celsius degrees to about 70Celsius degrees.

The dipping time of the metal substrate in the etching solution could be determined according to the concentration and temperature of the etching solution. Generally, the metal substrate may be dipped in the etching solution for about 10 minutes to about 5 hours, preferably for about 30minutes to about 2 hours.

The number of times of dipping the metal substrate in the etching solution and the dipping time of the metal substrate in the etching solution could be determined according to the constitution of the etching solution and the temperature of the etching solution. Generally, the metal substrate may be dipped in the etching solution for one time, or the metal substrate may be dipped in the etching solution for several times, for example 2 to 10. After each time of dipping, generally, the metal substrate is washed by water (preferably deionized water) so as to remove the etching solution attached on the metal substrate after surface treatment. The number of times of washing may be 2 to 10. The method of washing may be dipping the metal substrate after surface treatment in water for about 1minute to about 5minutes, and the method of washing may also be flushing the metal substrate after surface treatment by water for about 1minute to about 5minutes.

According to the method of the present disclosure, the etching step may be performed on the whole surface of the metal substrate or on part of the surface of the metal substrate. When the etching step is performed on part of the surface of the metal substrate, it could be dipping only part of the surface of the metal substrate which needs to be etched in the etching solution, it could also be forming a shielding mask on other part of the surface of the metal substrate which doesn't need to be etched and then dipping the whole metal substrate in the etching solution.

Comparing the metal substrate after surface treatment and the metal substrate before being etched, only a recess is distributed on surface and a color of surface of the metal substrate is deepened, the size of the metal substrate doesn't change much. In addition, a corrosion depth of the metal substrate after surface treatment obtained from the method of the present disclosure may be shallow, which may be liable to remove the recess and color change on surface region of the metal substrate that do not need to form resin layer thereon, such that the finally obtained composite may have a good appearance.

According to the method of the present disclosure, in the injection molding step, a composition containing a resin is injected onto surface of the metal substrate after surface treatment so as to fill part of the composition into the recess and to form a resin layer after molding.

The resin(namely the main resin herebelow) in the composition containing resin could be selected according to specific using requirement, as long as the resin could be combined with the titanium or titanium alloy. Generally, the main resin in the resin layer could be selected from thermoplastic resin, such as polyphenylene sulfide, polyester, polyamide, polycarbonate, polyolefin and combinations thereof. The polyester may be common polymer that formed through condensation of dicarboxylic acid and diol, the specific examples may include, but no limited to, polybutylene terephthalate and/or polyethylene glycol terephthalate. The polyamide could be common polymer that formed through condensation of diamine and dicarboxylic acid, the specific examples may include, but no limited to, polyhexamethylene adipamide(PA66), polynonylhexylenediamine(PA69), polybutyl diacylenediamin, polyhexamethylene dodecanamide(PA612), poly(hexamethylene sebacamide)(PA610), poly(decamethylene sebacamide)(PA1010), polyundecaneamid(PA11), polylauramide(PA12), polycaprylamide(PA8), poly(9-amino nonanoic acid)(PA9), polycaprolactam(PA6), poly(p-phenylene terephthalamide), polyphenyldimethylenediamine, polyhexamethylene terephthalamide (PA6T) and polynonamethylene terephthalamide(PA9T). The specific examples of the polyolefin may include, but no limited to, polystyrene, polypropylene, polymethyl methacrylate, and poly (acrylonitrile-butadiene styrene).

Besides the main resin, the composition containing resin may further include at least one kind of filler and/or one kind of fluidity improver.

The filler may be selected depending on specific using requirement. The filler may include a fiber filler and/or powder filler. The fiber filler may be at least one selected from a group consisting of glass fiber, carbon fiber and aromatic polyamide fiber. The powder filler may be at least one selected from a group consisting of calcium carbonate, magnesium carbonate, silicon dioxide, heavy barium sulfate, talcum powder, glass and clay.

The content of the filler may be common selections. Generally, based on 100 weight parts of the main resin, the filler has a content of about 10 weight parts to about 150 weight parts, preferably about 15 weight parts to about 100 weight parts, more preferably about 20 weight parts to about 50 weight parts.

The fluidity improver is used to improve a fluid ability of the main resin, further improve the combination force between the metal substrate and the resin, and improve a machining performance of the resin. The fluidity improver could be any material that could realize these effects above, preferably the fluidity improver includes a ring polyester.

The content of the fluidity improver may be determined based on that the fluidity improver could improve the fluid ability of the main resin. Preferably, based on 100 weight parts of the main resin, the fluidity improver has a content of about 1weight part to about 5weight parts.

The composition containing resin may further include various common assistants depending on specific using requirement, such as colorant and/or antioxidant, so as to improve performance of the resin layer or add new performance to the resin layer.

The composition containing resin may be obtained by evenly mixing the main resin, any selected filler, any selected fluidity improver and any selected assistant. Generally, the composition containing resin is obtained by evenly mixing the main resin, any selected filler, any selected fluidity improver and any selected assistant and then performing extrusion pelletizing.

The composition containing resin may be injected on surface of the metal substrate via various commonly used methods. In one embodiments of the present disclosure, the metal substrate after surface treatment is placed in a mould, and then the composition containing resin is injected on surface of the metal substrate after treatment via injection molding.

A condition of the injection molding could be selected according to category of the main resin in the composition containing resin. Preferably, the condition of the injection includes: a temperature of mould is about 50Celsius degrees to about 300Celsius degrees, a temperature of nozzle is about 200Celsius degrees to about 450Celsius degrees, a time of maintaining pressure is about 1second to about 50seconds, an injection pressure is about 50Mpa to about 300Mpa, a injection time is about 1second to about 30seconds, and a relay time is about 1second to about 30seconds.

An amount of the injected composition containing resin could be selected according to an expected thickness of the resin layer. Generally, the amount of the injected composition containing resin forms a resin layer having a thickness of about 0.5millimeters to about 10millimeters.

With the method of the present disclosure, when the resin layer is only formed on part surface of the metal substrate, other part surface of the metal substrate where a resin layer don't need to form thereon could be processed to remove the recess thereon and color variance caused by etching. This processing could be done prior the injection molding step, and also could be done after the injection molding step, there is no particular limit in the present disclosure.

According to a third aspect of the present disclosure, a metal-resin composite prepared by the method stated above is provided. The metal-resin composite prepared by the method of the present disclosure includes a metal substrate and a resin layer coated on at least part of surface of the metal substrate, a recess is distributed on the part of surface of the metal substrate coated with the resin layer, a part of resin of the resin layer extends downward to fill in the recess.

According to embodiments of the metal-resin composite prepared by the method of the present disclosure, a combination force between the resin layer and the metal substrate is high, and then a structure stability of the composite is good.

The metal-resin composite of the present disclosure could be applied to various situations that need to integrally mold metal and resin, such as electronic product shell. In a specific application, the metal may be molded into different shapes, and surface of the metal that need to form resin layer thereon should be subjected to surface treatment, and then the resin is injection molded so as to form resin layer.

Thus, according to a fourth aspect of the present disclosure, a shell of electronic product is provided. The shell includes a metal shell body and a resin member coated on at least part of an inner surface and/or at least part of an outer surface of the metal shell body, the metal shell body is made of titanium or titanium alloy, a recess is distributed on surface of the metal shell body coated with the resin member, part of resin in the resin member extends downward and fills in the recess. In embodiments of the present disclosure, the shell could have a sheet structure, and also the shell could have a frame structure, such as a surrounding frame.

The recess may have a width of about 10nanometers to about 100000nanometers, preferably about 300nanometers to about 30000nanometers, and the recess may have a depth of about 10nanometers to about 5000nanometers, preferably about 100nanometers to about 3000nanometers.

A content of oxygen element on surface of the metal shell body coated with the resin member is greater than 1wt%, preferably about 1wt% to about 10wt%, preferably about 2wt% to about 8wt%, more preferably about 5wt% to about 7wt%.

According to embodiments of the shell of electronic product of the present disclosure, depending on specific needs, more than one opening may be formed on the metal shell body, so as to install a member, of the electronic product, that need to be kept off the metal shell on a corresponding position of the opening. In one embodiment, because of the signal shielding effect that caused by the metal, at least a portion of the opening is corresponding to an installation position of a signal (such as electromagnetic signal) emitting member and/or a signal (such as electromagnetic signal) receiving member, then a resin member is preferably disposed on position of the opening, part of the resin member is filled in the opening, such that part of resin of the resin member is filed in the opening, the signal emitting member and/or a signal receiving member may be disposed on the resin member.

According to embodiments of the shell of electronic product of the present disclosure, the metal shell body may be an integral structure, and also the metal body may be a splicing structure. The splicing structure refers that the metal shell body includes at least two segments separated from each other, the two segments are spliced together to form the metal shell body.

When the metal shell body is a splicing structure, two adjacent segments may be fixed together via an adhesive. In some embodiments, the resin member is disposed on a joint position of two adjacent segments, the resin member is lap jointed to the two adjacent segments respectively and covers the joint position (namely the two adjacent segments are bridge connected via the resin member), then a combination strength of the joint position may be improved. In addition, the metal shell body may be divided into several segments depending on an inner structure of the electronic product, the resin member may not only function to make the metal shell to form a whole part, but also the resin member may function as an installation base of some electronic elements

According to embodiments of the shell of electronic product, the resin member may be coated on at least part of outer surface of the metal shell body. The resin member may be coated on the entire outer surface of the metal shell body and may also be coated on part of outer surface of the metal shell body to form a pattern on the outer surface of the metal shell body, for example a decorative pattern.

According to embodiments of the shell of electronic product of the present disclosure, when an inner surface of the metal shell body is coated with a resin member, the resin member may be disposed on one or more needed position. In one embodiment, the resin member is coated on entire inner surface of the metal shell body, then the resin member preferably is an integral structure. In some embodiments, it is suitable to application that the metal shell body is a splicing structure.

According to embodiments of the shell of electronic product of the present disclosure, the shell of electronic product could be used as shell of various electronic product which needs a metal shell, for example: a shell or a surrounding frame of mobile terminals, a shell or a surrounding frame of wearable electronic devices. The mobile terminal refers to a device that could be in a moving state and has a function of wireless communication, such as: mobile phone, a portable computer (including notebook computer and tablet computer). The wearable electronic device refers to a intelligent wearable device, such as an intelligent watch, an intelligent bracelet. The electronic product may be, but no limit to, a mobile phone, a portable computer (such as notebook computer and tablet computer), an intelligent watch, or an intelligent bracelet.

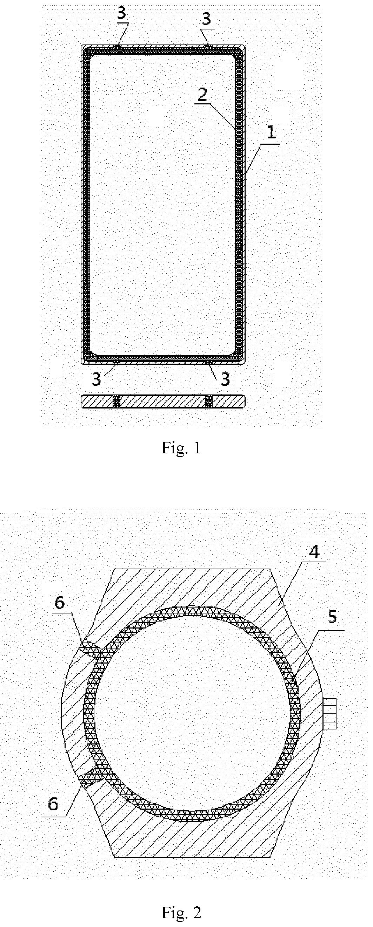

Fig. 1 is a front view and a top view of an example that when the shell of electronic product is used as a cell phone shell. As shown in Fig. 1, several openings 3 is disposed on the cell phone metal shell body 1, the position of the openings is corresponding to an installation position of antenna and various buttons. A resin layer 2 is coated on the entire inner surface of the cell phone metal shell body 1, the resin layer 2 is an integral structure and part of resin in the resin layer 2 is filled in the opening 3.

Fig. 2 is a front view of an example that when the shell of electronic product is used as a shell of an intelligent watch. As shown in Fig. 2, an signal element opening 6 that corresponding to install a signal emitting and or a signal receiving member is disposed on the intelligent watch shell body 4. A resin inside liner 5 is coated on inner surface of the intelligent watch shell body 4, part of resin of the resin inside liner 5 is filled in the signal element opening 6, and signal elements could be installed on a position corresponding to the resin inside liner 5.

The present disclosure will be given detailed description combining with Examples, these Examples should not be constructed to limit the scope of the present disclosure.

In Examples and Comparative Examples below, an average shearing strength between the metal substrate and the resin layer of the metal-resin composite is tested on a 3369 universal testing machine purchased from INSTRON in a stretching mode. A ratio of a tensile stress when the composite is fractured to a combination area is defined as the average shearing strength, the combination area refers to an area of a junction surface between the metal substrate and the resin layer.

In Examples and Comparative Examples below, a surface of and a fractured surface of the metal substrate after surface treatment is observed under a metallographic microscope, and a width and depth of the recess is identified. The metallographic microscope is Axio Imager A1m purchased from Zeiss.

In Examples and Comparative Examples below, the content of oxygen element on surface of the metal substrate is tested via a field emission scanning electron microscopy and its attachment energy disperse spectroscopy, the energy disperse spectroscopy is JSM-7600F purchased from JEOL Ltd. Energy spectrum analysis is performed on 10 selected points on surface of a tested sample, these 10 selected points is distributed on different position of surface of the tested sample, an average value of the content of oxygen element of these 10 selected points is defined as the content of oxygen element on surface of the metal substrate.

Examples 1 to 7 are used to illustrate the present disclosure.

### Example 1

### 1. Pre-treatment

A pure titanium plate sold in market having a thickness of 0.8millimeters is cut into a rectangle sheet having a size of 15millimeters*80millimeters, and then the rectangle sheet is placed in a polishing machine to be polished, and then the rectangle sheet is subjected to, in sequence, oil removing, washing and drying.

### 2. Surface treatment

A titanium sheet obtained after step (1) is dipped in a 500mL etching solution for 60 minutes under 25 Celsius degrees. Then the titanium sheet is taken out and washed via deionized water for 3 times, and then placed in an oven to dry under 65 Celsius degrees so as to obtain a titanium sheet after surface treatment. The etching solution is a mixed aqueous solution of sodium hydroxide and boric acid, the sodium hydroxide has a concentration of 7mol/L, and the boric acid has a concentration of 0.5mol/L.

Surface of the titanium sheet after surface treatment is observed under a metallographic microscope, it is identified that a densely distributed recess is formed on surface of the titanium sheet after surface treatment, and the recess has a width in a range of 300nanometers to 30000nanometers, and a depth in a range of 100nonameters to 3000nanometers. Energy spectrum analysis is performed on surface of the titanium sheet after surface treatment via a scanning electron microscopy so as to measure the content of each element and the content of oxygen element on surface of the titanium sheet after surface treatment. The result is recorded in Table 1.

### 3. Injection molding

The titanium sheet after surface treatment obtained after step (2) is placed in a mould, and a composition containing polyphenylene sulfide(PPS) and glass fiber is injection molded into the mould so as to form a resin layer on one surface of the titanium sheet to obtain a metal-resin composite(a thickness of the resin layer is 3millimeters). Based on 100 weight parts of the polyphenylene sulfide, the glass fiber has a content of 20 weight parts.

In the composite, an average shearing strength between the metal substrate and the resin layer is listed in Table 2.

### Comparative Example 1

(1) A pretreatment of this Comparative Example is performed by using a method same as step (1) of Example 1.
(2) A composition containing polyphenylene sulfide and glass fiber is injection molded onto surface of the titanium sheet after step (1) by using a method same as step (3) of Example 1 so as to obtain a metal-resin composite. In the composite, an average shearing strength between the metal substrate and the resin layer is listed in Table 2.

### Comparative Example 2

(1) A pretreatment of this Comparative Example is performed by using a method same as step (1) of Example 1.
(2) Surface treatment
   The titanium sheet obtained after step (1) is dipped in a 500mL etching solution for 24 minutes under 25 Celsius degrees. Then the titanium sheet is taken out and washed via deionized water for 3 times, and then placed in an oven to dry under 65 Celsius degrees so as to obtain a titanium sheet after surface treatment. An average hardness of the titanium sheet is listed in Table 1. The etching solution is a aqueous solution of ammonium bifluoride, the ammonium bifluoride has a concentration of 1wt%.
   Surface of the titanium sheet after surface treatment is observed under a metallographic microscope, it is identified that a densely distributed recess is formed on surface of the titanium sheet after surface treatment, and the recess has a width in a range of 20000nanometers to 150000nanometers, and a depth in a range of 1000nonameters to 10000nanometers. Energy spectrum analysis is performed on surface of the titanium sheet after surface treatment via a scanning electron microscopy so as to measure the content of each element and the content of oxygen element on surface of the titanium sheet after surface treatment. The result is recorded in Table 1.
(3) Injection molding
   A composition containing polyphenylene sulfide and glass fiber is injection molded onto surface of the titanium sheet after surface treatment obtained after step (2) using a method same as step (3) of Example 1 so as to obtain a metal-resin composite.
   In the composite, an average shearing strength between the metal substrate and the resin layer is listed in Table 2.

### Comparative Example 3

(1) A pretreatment of this Comparative Example is performed by using a method same as step (1) of Example 1.
(2) Surface treatment
   A titanium sheet obtained after step (1) is dipped a 500mL anodic oxidation electrolyte to perform anodic oxidation. The electrolyte is an aqueous solution of phosphoric acid, the phosphoric acid has a concentration of 10wt%, the anodic oxidation is performed under a voltage of 20V, a conduction time of 10minutes. And then the titanium sheet after anodic oxidation is washed via deionized water for 3 times, and then placed in an oven to dry under 65 Celsius degrees so as to obtain a titanium sheet after surface treatment.
(3) Injection molding
   A composition containing polyphenylene sulfide and glass fiber is injection molded onto surface of the titanium sheet after surface treatment obtained after step (2) by using a method same as step (3) of Example 1 so as to obtain a metal-resin composite.

In the composite, an average shearing strength between the metal substrate and the resin layer is listed in Table 2.

### Example 2

(1) A pretreatment of this Example is performed by using a method same as step (1) of Example 1.
(2) Surface treatment
   A titanium sheet obtained after step (1) is dipped in a 500mL etching solution for 30 minutes under 35 Celsius degrees. Then the titanium sheet is taken out and washed via deionized water for 3 times, and then placed in an oven to dry under 65 Celsius degrees so as to obtain a titanium sheet after surface treatment. The etching solution is a mixed aqueous solution of sodium hydroxide and disodium hydrogen phosphate, the sodium hydroxide has a concentration of 7mol/L, and the disodium hydrogen phosphate has a concentration of 1mol/L.
   Surface of the titanium sheet after surface treatment is observed under a metallographic microscope, it is identified that a densely distributed recess is formed on surface of the titanium sheet after surface treatment, and the recess has a width in a range of 300nanometers to 30000nanometers, and a depth in a range of 100nonameters to 3000nanometers. Energy spectrum analysis is performed on surface of the titanium sheet after surface treatment via a scanning electron microscopy so as to measure the content of each element and the content of oxygen element on surface of the titanium sheet after surface treatment. The result is recorded in Table 1.
(3) A composition containing polyphenylene sulfide and glass fiber is injection molded onto surface of the titanium sheet after surface treatment obtained after step (2) by using a method same as step (3) of Example 1 so as to obtain a metal-resin composite. Based on 100 weight parts of the polyphenylene sulfide, the glass fiber has a content of 20 weight parts. In the composite, an average shearing strength between the metal substrate and the resin layer is listed in Table 2.

### Example 3

(1) A pretreatment of this Example is performed by using a method same as step (1) of Example 1.
(2) Surface treatment
   A titanium sheet obtained after step (1) is dipped in a 500mL etching solution for 120 minutes under 15 Celsius degrees. Then the titanium sheet is taken out and washed via deionized water for 3 times, and then placed in an oven to dry under 65 Celsius degrees so as to obtain a titanium sheet after surface treatment. The etching solution is a mixed aqueous solution of sodium hydroxide and sodium carbonate, the sodium hydroxide has a concentration of 6mol/L, and the sodium carbonate has a concentration of 0.2mol/L.
   Surface of the titanium sheet after surface treatment is observed under a metallographic microscope, it is identified that a densely distributed recess is formed on surface of the titanium sheet after surface treatment, and the recess has a width in a range of 300nanometers to 30000nanometers, and a depth in a range of 100nonameters to 3000nanometers. Energy spectrum analysis is performed on surface of the titanium sheet after surface treatment via a scanning electron microscopy so as to measure the content of each element and the content of oxygen element on surface of the titanium sheet after surface treatment. The result is recorded in Table 1.
(3) A composition containing polyphenylene sulfide and glass fiber is injection molded onto surface of the titanium sheet after surface treatment obtained after step (2) by using a method same as step (3) of Example 1 so as to obtain a metal-resin composite. Based on 100 weight parts of the polyphenylene sulfide, the glass fiber has a content of 20 weight parts. In the composite, an average shearing strength between the metal substrate and the resin layer is listed in Table 2.

### Example 4

(1) A pretreatment of this Example is performed by using a method same as step (1) of Example 1.
(2) A surface treatment of this Example is performed by using a method substantially same as step (2) of Example 1 is performed on a titanium sheet obtained after step (1) so as to obtain a titanium sheet after surface treatment, except for that: the etching solution is an aqueous solution of sodium hydroxide, the sodium hydroxide has a concentration of 7mol/L.
   Surface of the titanium sheet after surface treatment is observed under a metallographic microscope, it is identified that a densely distributed recess is formed on surface of the titanium sheet after surface treatment, and the recess has a width in a range of 10nanometers to 100000nanometers, and a depth in a range of 10nonameters to 5000nanometers. Energy spectrum analysis is performed on surface of the titanium sheet after surface treatment via a scanning electron microscopy so as to measure the content of each element and the content of oxygen element on surface of the titanium sheet after surface treatment. The result is recorded in Table 1.
(3) A composition containing polyphenylene sulfide and glass fiber is injection molded onto surface of the titanium sheet after surface treatment obtained after step (2) by using a method same as step (3) of Example 1 so as to obtain a metal-resin composite.

In the composite, an average shearing strength between the metal substrate and the resin layer is listed in Table 2.

### Example 5

(1) A pretreatment of this Example is performed by using a method same as step (1) of Example 1.
(2) A surface treatment of this Example is performed by using a method substantially same as step (2) of Example 1 is performed on a titanium sheet obtained after step (1) so as to obtain a titanium sheet after surface treatment, except for that: the etching solution has a temperature of 70Celsius degrees, and the dipping time is 30 minutes.
   Surface of the titanium sheet after surface treatment is observed under a metallographic microscope, it is identified that a densely distributed recess is formed on surface of the titanium sheet after surface treatment, and the recess has a width in a range of 300nanometers to 30000nanometers, and a depth in a range of 100nonameters to 3000nanometers. Energy spectrum analysis is performed on surface of the titanium sheet after surface treatment via a scanning electron microscopy so as to measure the content of each element and the content of oxygen element on surface of the titanium sheet after surface treatment. The result is recorded in Table 1.
(3) A composition containing polyphenylene sulfide and glass fiber is injection molded onto surface of the titanium sheet after surface treatment obtained after step (2) by using a method same as step (3) of Example 1 so as to obtain a metal-resin composite.

In the composite, an average shearing strength between the metal substrate and the resin layer is listed in Table 2.

### Example 6

### 1. Pre-treatment

A pure titanium alloy plate sold in market having a thickness of 0.8millimeters is cut into a rectangle sheet having a size of 15millimeters*80millimeters, and then the rectangle sheet is placed in a polishing machine to be polished, and then the rectangle sheet is subjected to, in sequence, oil removing, washing and drying.

### 2. Surface treatment

A titanium alloy sheet obtained after step (1) is dipped in a 500mL etching solution for 60 minutes under 25 Celsius degrees. Then the titanium alloy sheet is taken out and washed via deionized water for 3 times, and then placed in an oven to dry under 65 Celsius degrees so as to obtain a titanium sheet after surface treatment. The etching solution is a mixed aqueous solution of potassium hydroxide and sodium citrate, the potassium hydroxide has a concentration of 7mol/L, and the sodium citrate has a concentration of 0.5mol/L.

Surface of the titanium alloy sheet after surface treatment is observed under a metallographic microscope, it is identified that a densely distributed recess is formed on surface of the titanium alloy sheet after surface treatment, and the recess has a width in a range of 300nanometers to 30000nanometers, and a depth in a range of 100nonameters to 3000nanometers. Energy spectrum analysis is performed on surface of the titanium alloy sheet after surface treatment via a scanning electron microscopy so as to measure the content of each element and the content of oxygen element on surface of the titanium alloy sheet after surface treatment. The result is recorded in Table 1.

### 3. Injection molding

The titanium alloy sheet after surface treatment obtained after step (2) is placed in a mould, and a composition containing polybutylene terephthalate (PBT) and glass fiber is injection molded into the mould so as to form a resin layer on one surface of the titanium alloy sheet to obtain a metal-resin composite(a thickness of the resin layer is 3millimeters). Based on 100 weight parts of the polybutylene terephthalate, the glass fiber has a content of 20 weight parts.

In the composite, an average shearing strength between the metal substrate and the resin layer is listed in Table 2.

### Example 7

(1) A pretreatment of this Example is performed by using a method same as step (1) of Example 6.
(2) A surface treatment of this Example is performed by using a method substantially same as step (2) of Example 6 is performed on a titanium alloy sheet obtained after step (1) so as to obtain a titanium alloy sheet after surface treatment, except for that: the etching solution has a temperature of 45Celsius degrees, and the dipping time is 40 minutes.
   Surface of the titanium alloy sheet after surface treatment is observed under a metallographic microscope, it is identified that a densely distributed recess is formed on surface of the titanium alloy sheet after surface treatment, and the recess has a width in a range of 300nanometers to 30000nanometers, and a depth in a range of 100nonameters to 3000nanometers. Energy spectrum analysis is performed on surface of the titanium alloy sheet after surface treatment via a scanning electron microscopy so as to measure the content of each element and the content of oxygen element on surface of the titanium alloy sheet after surface treatment. The result is recorded in Table 1.
(3) A composition containing polybutylene terephthalate and glass fiber is injection molded onto surface of the titanium alloy sheet after surface treatment obtained after step (2) by using a method same as step (3) of Example 6 so as to obtain a metal-resin composite.

In the composite, an average shearing strength between the metal substrate and the resin layer is listed in Table 2.

**Table 1**

| Content of oxygen element(wt%) | Example 1 | Example 2 | Example 3 | Example 4 | Example 5 | Example 6 | Example 7 |
|---|---|---|---|---|---|---|---|
| Prior to surface treatment | 0.15 | 0.15 | 0.15 | 0.15 | 0.15 | 0.18 | 0.18 |
| After surface treatment | 6.60 | 6.48 | 6.39 | 6.33 | 6.41 | 5.63 | 5.24 |

**Table 2**

| No. | Average shearing strength/MPa |
|---|---|
| Example 1 | 18.19 |
| Comparative Example 1 | /* |
| Comparative Example 2 | 9.21 |
| Comparative Example 3 | 7.63 |
| Example 2 | 17.57 |
| Example 3 | 16.96 |
| Example 4 | 15.21 |
| Example 5 | 16.36 |
| Example 6 | 14.32 |
| Example 7 | 12.54 |

| | |
|---|---|
| *: When demoulding, the resin layer falls off from the metal substrate | |

As we can see from Table 2, with the metal-resin composite of the present disclosure, the average shearing strength between the metal substrate and the resin layer is high, which may indicate that a combination force between the metal substrate and the resin layer is relatively high, thus the metal-resin composite of the present disclosure may have a good structure stability.

## Claims

1. A metal-resin composite, wherein the metal includes titanium or titanium alloy, the composite comprises a metal substrate and a resin layer coated on at least part of surface of the metal substrate, a recess is distributed on the part of surface of the metal substrate coated with the resin layer, a part of resin of the resin layer extends downward to fill in the recess, a content of oxygen element on surface of the metal substrate is greater than 1wt%.

2. The composite of claim 1, wherein the recess has a width of about 10nanometers to about 100000nanometers, preferably about 300nanometers to about 30000nanometers, the recess has a depth of about 10nanometers to about 5000nanometers, preferably about 100nanometers to about 3000nanometers.

3. The composite of claim 1 or 2, wherein the content of oxygen element on surface of the metal substrate is about 1wt% to about 10wt%, preferably about 2wt% to about 8wt%, more preferably about 5wt% to about 7wt%.

4. A method of preparing a metal-resin composite, wherein the metal includes titanium or titanium alloy, the method comprises an etching step and an injection molding step,
wherein in the etching step, a metal substrate is dipped in an etching solution so as to form a recess on surface of the metal substrate to obtain a metal substrate after surface treatment, the etching solution includes at least one alkali metal hydroxide, a content of oxygen element on surface of the metal substrate after surface treatment is greater than 1wt%;
in the injection molding step, a composition containing a resin is injected onto surface of the metal substrate after surface treatment so as to fill part of the composition into the recess and to form a resin layer after molding.

5. The method of claim 4, wherein the alkali metal hydroxide includes sodium hydroxide and/or potassium hydroxide.

6. The method of claim 4 or 5, wherein the alkali metal hydroxide has a concentration of about 1mol/L to about 10mol/L.

7. The method of any one of claim 4-6, wherein the etching solution further includes at least one buffering agent, the buffering agent is configured to stabilize a concentration of a hydroxide ion in the etching solution.

8. The method of claim 7, wherein the buffering agent is at least one selected from a group consisting of boric acid, sodium borate, sodium carbonate, sodium hydrogen carbonate, trisodium phosphate, disodium hydrogen phosphate, and sodium citrate.

9. The method of claim 7 or 8, wherein the buffering agent has a concentration of about 0.1mol/L to about 1.5mol/L.

10. The method of any one of claims 4-9, wherein the etching solution has a temperature of about 15Celsius degrees to about 70Celsius degrees.

11. The method of any one of claims 4-10, wherein a recess is formed on surface of the metal substrate after surface treatment, the recess has a width of about 10nanometers to about 100000nanometers, preferably about 300nanometers to about 30000nanometers, the recess has a depth of about 10nanometers to about 5000nanometers, preferably about 100nanometers to about 3000nanometers.

12. The method of any one of claims 4-11, wherein the content of oxygen element on surface of the metal substrate after surface treatment is about 1wt% to about 10wt%, preferably about 2wt% to about 8wt%, more preferably about 5wt% to about 7wt%.

13. A metal-resin composite prepared by the method of any one of claims 4-12.

14. A shell of electronic product, the shell comprising a metal shell body and a resin member coated on at least part of an inner surface and/or at least part of an outer surface of the metal shell body, the metal shell body is made of titanium or titanium alloy, wherein a recess is distributed on surface of the metal shell body coated with the resin member, part of resin in the resin member extends downward and fills in the recess, a content of oxygen element on surface of the metal shell body coated with the resin member is greater than 1wt%.

15. The shell of claim 14, wherein the recess has a width of about 10nanometers to about 100000nanometers, preferably about 300nanometers to about 30000nanometers, the recess has a depth of about 10nanometers to about 5000nanometers, preferably about 100nanometers to about 3000nanometers.

16. The shell of claim 14 or claim 15, wherein the content of oxygen element on surface of the metal shell body coated with the resin member is about 1wt% to about 10wt%, preferably about 2wt% to about 8wt%, more preferably about 5wt% to about 7wt%.

17. The shell of any one of claims 14 to 16, wherein more than one opening is formed on the metal shell body.

18. The shell of claim 17, wherein at least a portion of the opening is corresponding to an installation position of a signal emitting member and/or a signal receiving member.

19. The shell of claim 17 or 18, wherein a resin member is disposed on position of the opening, part of the resin member is filled in the opening.

20. The shell of any one of claims 14 to 19, wherein the metal shell body includes at least two segments separated from each other, the resin member is disposed on a joint position of two adjacent segments, the resin member is lap jointed to the two adjacent segments respectively and covers the joint position.

21. The shell of any one of claims 14 to 20, wherein the resin member is coated on at least part of outer surface of the metal shell body, and the resin member forms a pattern on the outer surface of the metal shell body.

22. The shell of any one of claims 14 to 21, wherein the resin member is coated on entire inner surface of the metal shell body.

23. The shell of claim 22, wherein the resin member coated on the metal shell body has an integral structure.

24. The shell of any one of claims 14 to 23, wherein the electronic product includes a mobile terminal or a wearable electronic device.

25. The shell of any one of claims 14 to 23, wherein the electronic product includes a mobile phone, a portable computer, an intelligent watch, or an intelligent bracelet.
